# EUROPEAN PATENT APPLICATION

(11) **EP 2 096 739 A2**
(43) Date of publication of application: **02.09.2009**
(21) Application number: 09153684.7
(22) Date of filing: 25.02.2009
(51) Int. Cl.: H02K 15/00

(54) **Method and tool for disassembling an alternator of an electric power production plant**

(30) Priority: 29.02.2008 IT MI20080347
(71) Applicant: ANSALDO ENERGIA S.P.A., 16152 Genova (IT)
(72) Inventor: Vallarino, Domenico, 16157, GENOVA (IT); Vercelli, Giorgio, 16164, GENOVA (IT)
(74) Representative: Jorio, Paolo

(57) **Abstract**

A method for disassembling an alternator (1) of an electric power production plant provided with a stator (3) having a cylindrical core (4), two opposing heads (6) and a plurality of windings (7), each of which is provided with conductor bars (8) connected to one another in correspondence with the heads (6) according to a predefined electrical layout, consists of shearing the conductor bars (8) of the stator (3) in proximity of the heads (6).

## Description

The present invention relates to a method and a tool for disassembling an alternator of an electric power production plant.

After a first life-cycle, electric power production plants may have to undergo major maintenance and rebuilding. In particular, rebuilding often involves replacing the most worn or damaged parts with new parts. For example, the stator electric windings consisting of conductor bars may need to be replaced with new electric windings.

The conductor bars are usually disassembled by cutting the conductor bars at the heads of the stator of the alternator. Cutting is usually performed using alternating saws or circular saws, the use of which results in the production of shavings of copper and residues of the insulation of the conductor bars, which contaminate the parts inside the alternator.

After performing the cutting operations, the parts inside the alternator must therefore be cleaned. These cleaning operations are particularly difficult and do not always guarantee satisfactory results, since these depend on the care taken by operators and the amount of time available.

Moreover, the use of alternating saws or circular saws to cut the conductor bars is a relatively time-consuming operation also due to the fact that it is sometimes difficult to access the bars.

It is an object of the present invention to provide a method and a tool for disassembling an alternator of an electric power production plant that overcomes the drawbacks of the prior art described above; in particular, it is an object of the present invention to provide a method and a tool for disassembling an alternator that is reliable, safe and clean.

According to the above objects, the present invention relates to a method for disassembling an alternator of an electric power production plant; the alternator comprising a stator having a cylindrical core, two opposing heads and a plurality of windings, each of which comprises conductor bars connected to one another at the heads according to a predefined electrical layout; the method consisting of removing the conductor bars of the stator; the method being **characterized in that** the conducting bars of the stator are shorn in proximity of the heads.

According to the above objects, the present invention relates to a tool for disassembling an alternator of an electric power production plant; the alternator comprising a stator having a cylindrical core, two opposing heads and a plurality of windings, each of which comprises conductor bars connected to one another at the heads according to a predefined electrical layout; the tool being **characterized in that** it comprises a sliding guillotine-type blade suitable for shearing at least one conductor bar of a winding of the stator.

Further characteristics and advantages of the present invention will become clear from the following description of a non-limiting embodiment thereof, with reference to the accompanying drawings, in which:
- figure 1 is a schematic view, with parts in cross-section and parts removed for the sake of clarity of an alternator of an electric power production plant;
- figure 2 is a plan view from the top of a detail of the alternator of figure 1;
- figure 3 is a perspective view of the disassembling tool in a first operating position according to the present invention; and
- figure 4 is a perspective view of the disassembling tool of figure 3 in a second operating position.

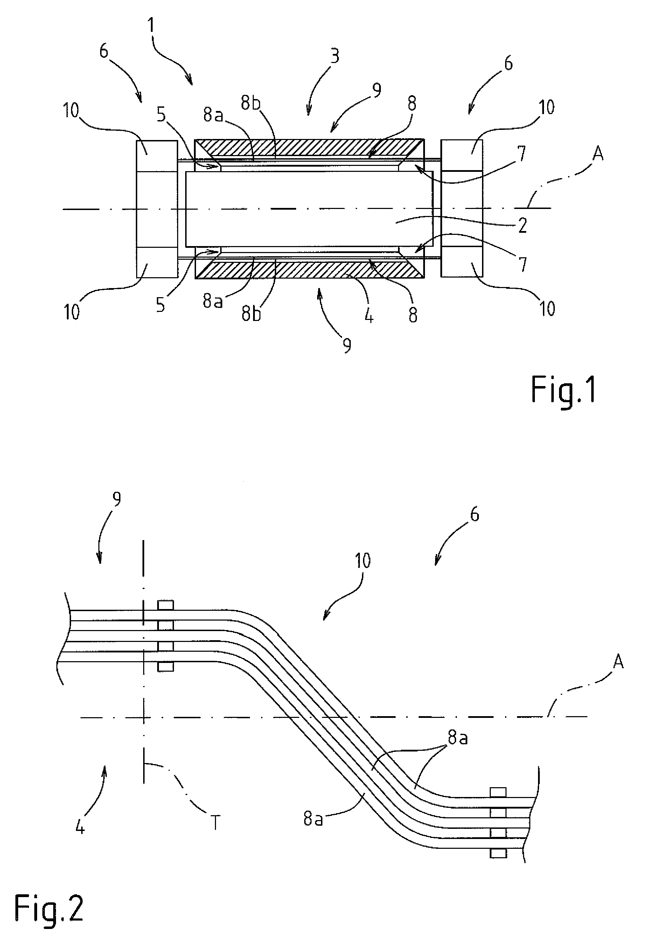

In figure 1 number 1 indicates an alternator of an electric power production plant, which extends along a longitudinal axis A and comprises a rotor 2, which is the mobile inductor, and a stator 3, which is the fixed inductor of the alternator 1.

The rotor 2 is substantially cylindrical in shape and turns, driven by a turbine (not illustrated) about its axis, which coincides with the longitudinal axis A of the alternator 1. The stator 3 is substantially in the form of a hollow cylinder coaxial with the rotor 2, extends about the rotor 2 and is separated from the rotor 2 by an air gap.

The stator 3 comprises a cylindrical core 4 provided with a plurality of axial slots 5, two opposing heads 6 and a plurality of windings 7, each of which is defined by conductor bars 8 connected to one another at the heads 6 according to a predefined electrical layout. In particular, each conductor bar 8 extends along a first section 9, substantially parallel to the axis A and inside a respective axial slot 5 of the core 4, and along two second sections 10 at the heads 6. The second sections 10 of the conductor bars 8 are indicated collectively in figure 1 by two annular windings arranged at the heads 6.

Each axial slot 5 houses two conductor bars 8, an outer slot conductor bar 8a and an inner slot conductor bar 8b.

Figure 2 shows a number of conductor bars 8, three by way of example, in the boundary area between the core 4 and one of the heads 6. The conductor bars 8 illustrated in figure 2 are outer slot conductor bars 8a which hide the inner slot conductor bars 8b from view, since the latter are arranged beneath the outer slot conductor bars 8a.

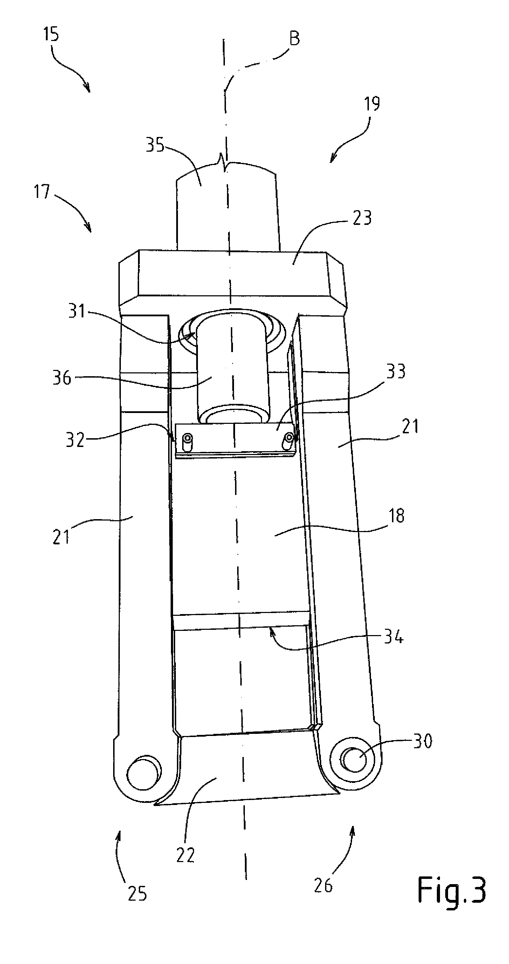

In figure 3, number 15 indicates a tool for disassembling the alternator 1 extending along a longitudinal axis B.

The tool comprises a frame 17, a blade 18 and actuating means 19 of the blade 18.

The frame 17 comprises two lateral guideways 21 parallel to the axis B, along which the blade 18 is slidable, a bracket 22 defining an end-of-travel position of the blade 18 and a base 23 defining a start-of-travel position of the blade 18.

The bracket 22 is suitable for acting as a striker for the blade 18 and has a first end 25 pivotally attached to one of the guideways 21 and a second end 26 suitable for being constrained to the other of the two guideways 21.

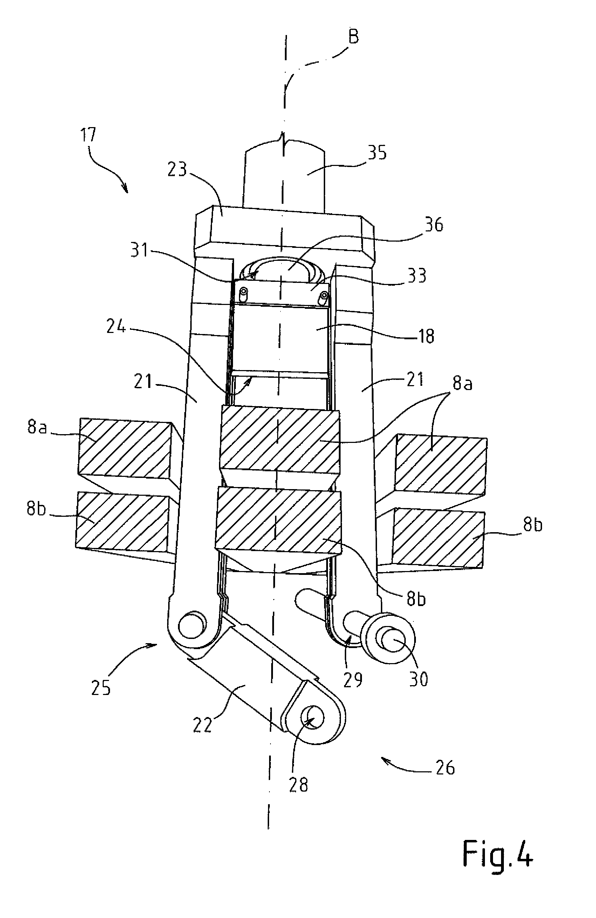

In figure 4 the tool 15 is illustrated in a second operating position in which the second end 26 of the bracket 22 is not constrained to the respective guideway 21. The second end 26 of the bracket 22 is provided with a hole 28 suitable for being aligned with a hole 29 of the respective guideway 21. Both of the holes 28 and 29 are suitable for being engaged by a pin 30 to fix the second end of the bracket 22 to the respective guideway 21.

With reference to figure 3, the base 23 is provided with a central hole 31 suitable for housing, as described in detail later on in this document, a portion of the actuating means 19 of the blade 18.

The blade 18 is substantially rectangular and is slidable along the guideways 21 in a direction parallel to the axis B. In particular, the blade 18 is provided with a first side 32 orthogonal to the axis B and attached to a blade-carrier 33, and a second side 34 orthogonal to the axis B, opposite the first side 32 and sharp.

The blade-carrier 33 is attached to the blade 18 by means of fastening means of the known type, for example screws, and is connected to the actuating means 19.

The actuating means 19 substantially comprise a cylinder 35 housed in the central hole 31 and fixed to the base 23, a piston 36 slidable inside the cylinder 35 and connected to the blade-carrier 33, and a pump (not illustrated for the sake of simplicity in the accompanying drawings) suitable for pumping a pressurized fluid into the cylinder 35 to move the piston 36.

The pump can be operated manually or by means of an electric motor (not illustrated in the accompanying drawings).

In use, the activation of the pump causes the piston 36 to move, which rapidly moves the blade 18, guided by the guideways 21, towards the object to be shorn that is arranged between the blade 18 and the bracket 22, operating as a guillotine.

The method for disassembling the alternator 1 according to the present invention substantially consists of:
- shearing all the conductor bars 8 of the stator 3 of the alternator 1 along the boundary area between the core 4 and the heads 6, i.e. substantially along the dash- and-dot line T indicated approximately in figure 2;
- removing the heads 6; and
- removing the substantially rectilinear portions of conductor bars 8 arranged inside the respective axial slots 5 of the core 4.

Shearing the conductor bars 8 of the stator 3 substantially consists of:
- releasing the second end 26 of the bracket 22 of the tool 15 from the respective guideway 21, by extracting the pin 30;
- placing the tool 15 around two conductor bars 8, in particular around the inner slot conductor bars 8b and the outer slot conductor bars 8a, so that the axis B of the tool 15 is substantially orthogonal to the conductor bar 8 towards which the second sharp edge 34 of the blade 18 is facing (figure 4);
- coupling the second end 26 of the bracket 22 to the respective guideway 21 by inserting the pin 30 into the holes 28 and 29 respectively of the bracket 22 and of the guideway 21 and securing the pin 30 for example by means of a bolt that is not illustrated; and
- operating the driving pump of the piston 36.

Advantageously, with the method according to the present invention, shearing the conductor bars 8 does not result in the production of shavings of copper or of residues of the insulation of the conductor bars 8. It is therefore possible to avoid the difficult and not always satisfactory operations required to clean the parts inside the alternator 1.

Moreover, the method according to the present invention is particularly fast and safe compared to conventional methods. The conductor bars 8 are shorn very quickly and, above all, the use of the tool 15 according to the present invention enables two conductor bars 8 to be shorn at once, one outer slot bar 8a and one inner slot bar 8b.

Furthermore, the tool 15 guarantees greater safety for the operator during use compared to conventional cutting tools.

Lastly, it is clear that modifications and variations may be made to the tool and method described herein without departing from the scope of the present invention as set forth in the claims.

## Claims

1. Method for disassembling an alternator (1) of an electric power production plant; the alternator (1) comprising a stator (3) having a cylindrical core (4), two opposing heads (6) and a plurality of windings (7), each of which comprises conductor bars (8) connected to one another at the heads (6) according to a predefined electrical layout; the method consisting of removing the conductor bars (8) of the stator (3); the method being **characterized by** shearing the conductor bars (8) of the stator (3) in proximity of the heads (6).

2. Method according to claim 1, **characterized by** shearing the conductor bars (8) substantially along the boundary areas between the core (4) and the heads (6) of the stator (3).

3. Method according to claim 2, **characterized by** removing the heads (6) from the stator (3) after shearing all the conductor bars (8).

4. Method according to claim 3, **characterized by** extracting portions of conductor bars (8) extending inside respective axial slots (5) of the core (4) after removing the heads (6).

5. Method according to any one of the previous claims, **characterized by** shearing the conductor bars (8) using a tool (15) having a slidable guillotine-type blade (18).

6. Method according to claim 5, **characterized by** arranging the tool (15) around at least one conductor bar (8) and operating the blade (18) to shear at least the conductor bar (8).

7. Method according to claim 6, **characterized in that** the tool comprises a frame (17), defined by two parallel lateral guideways (21) along which the blade is slidable, by a bracket (22) defining the end-of-travel position of the blade (18) and a base (23) defining the start-of-travel position of the blade (18); the bracket (22) having a first end (25) pivoted to one of the two guideways (21) and a second end (26) suitable for being selectively constrained to the other of the two guideways (21).

8. Method according to claim 7, **characterized by** releasing the first end (26) of the bracket (22) from the respective guideway (21), placing the tool with the blade (18) facing the conductor bar (8) to be shorn and coupling the first end of the bracket (22) to the respective guideway (21).

9. Method according to any one of the claims from 6 to 8, **characterized by** operating the blade (18) by means of a hydraulic piston (36) of a cylinder (35) connected to the frame (17); the piston (36) being connected to the blade (18).

10. Tool for disassembling an alternator (1) of an electric power production plant; the alternator (1) comprising a stator (3) having a cylindrical core (4), two opposing cylinder heads (6) and a plurality of windings (7), each of which comprises conductor bars (8) connected to one another at the cylinder heads (6) according to a predefined electrical layout; the tool (15) being **characterized in that** it comprises a guillotine-type sliding blade (18) suitable for shearing at least one conductor bar (8) of a winding (7) of the stator (3).

11. Tool according to claim 10, **characterized in that** it comprises a frame (17) defined by two parallel lateral guideways (21) along which the blade (18) slides, a bracket (22) defining the end-of-travel position of the blade (18) and a base (23) defining the start-of-travel position of the blade (18).

12. Tool according to claim 11, **characterized in that** the bracket (22) is provided with a first end (25) pivoted to one of the two guideways (21) and a second end (26) suitable for being constrained to the other of the two guideways (21).

13. Tool according to any one of the claims from 10 to 12, **characterized in that** it comprises actuating means (19) of the blade (18).

14. Tool according to claim 13, **characterized in that** the actuating means (19) comprise a cylinder (35) and a hydraulic piston (36) slidable along the cylinder (35) and connected to the blade (18).

15. Tool according to claim 14, **characterized in that** the piston (36) is actuated by a pump.
